# EUROPÄISCHE PATENTSCHRIFT

(11) **EP 0 649 805 B1**
(45) Veröffentlichungstag und Bekanntmachung des Hinweises auf die Patenterteilung: **14.05.1997**
(21) Anmeldenummer: 94116517.7
(22) Anmeldetag: 20.10.1994
(51) Int. Cl.: B65G 61/00, B65G 47/90

(54) **Greifer für eine Einrichtung zur Entnahme von oben offenen, gestapelten Kästen**
Gripper of a removing device for open-up stacked boxes
Griffe d'un dispositif pour prélever des caisses empilées, ouvertes à leur face supérieure

(30) Priorität: 23.10.1993 DE 4336199
(43) Veröffentlichungstag der Anmeldung: 26.04.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: Duve, Bernd, Dipl.-Ing., D-44359 Dortmund (DE); Broer, Werner, Dipl.-Ing., D-44534 Lünen (DE); Mackowiak, Hans-Jürgen, Dipl.Ing., 44575 Castrop Rauxel (DE)

(56) Entgegenhaltungen:
- DE-A- 4 213 301
- DE-B- 1 201 523
- DE-B- 1 218 129
- DE-U- 9 214 477
- GB-A- 1 135 266
- US-A- 2 926 801

## Beschreibung

Die Erfindung betrifft einen Greifer für eine Einrichtung zur Entnahme von oben offenen, auf einer Palette oder dergleichen gestapelten Kästen, insbesondere Getränkekästen, gemäß dem Oberbegriff des Hauptanspruches.

Eine bekannte Einrichtung zur Entnahme von oben offenen, gestapelten Kästen weist eine sich über die gesamte Breite der Palette erstreckende Traverse mit einer Greifvorrichtung auf, an der Greifköpfe angeordnet sind und jeder Greiferkopf mit einem aktiven Greifer zum Fixieren des aufzunehmenden Kastens ausgestattet ist. Insbesondere weist die Traverse eine solche Breite auf, daß auch die Bearbeitung von Europaletten möglich ist. Die an der Traverse angeordneten Greiferköpfe weisen je einen finger- oder lamellenartigen Greifer auf. Mit dieser Einrichtung können Kästen oder andere Gegenstände, die auch unterschiedlich und unregelmäßig auf der Palette gestapelt sind, entnommen werden. Der Abstand der lamellenartigen oder fingerartigen Greifer untereinander ist in Längsrichtung der Traverse flexibel einstellbar, so daß unterschiedlich große Kästen gegriffen werden können. Auch eine automatische Verstellbarkeit zur Anpassung an verschiedene Greifbreiten, resultierend aus unterschiedlichen Kastenbreiten, ist realisierbar.

Aufgabe der vorliegenden Erfindung ist es, einen Greifer für die oben beschriebene Einrichtung anzugeben, der bei einfacher und gebrauchsvorteilhafter Bauform zuverlässige Entnahme von gestapelten Kästen ermöglicht.

Diese Aufgabe wird durch den im Anspruch 1 angegebenen Greifer gelöst. Die Unteransprüche stellen vorteilhafte Weiterbildungen dar.

Der erfindungsgemäße Greifer weist Greifbacken auf, die zwischen dem zu entnehmenden Kasten und der Greifervorrichtung einen Reib-/Formschluß herstellen. Dadurch ist eine zuverlässige Entnahme der gestapelten Kästen, unabhängig von einer Greiföffnung, möglich. Die Greifbacken sind durch Greiffinger und mindestens eine Druckleiste gebildet. Die Greiffinger sind in Greifkraftrichtung bewegbar und in achsialer Richtung nachgiebig ausgestaltet. Die Bewegbarkeit in Greifkraftrichtung ist notwendig um durch mit der in gleicher Richtung bewegbaren Druckleiste den zu entnehmenden Kasten zu greifen, d.h. einen Kraft/Reibschluß zu der zu greifenden Kante des Kastens herzustellen. Durch die achsiale Nachgiebigkeit der Greiffinger ist erreicht, daß auch bei einem Einfahrvorgang des Greifers in einen zu entnehmenden Kasten, der z.B. mit Flaschen gefüllt ist, beim Auftreffen des Greiffingers auf einen Flaschenhals der Greiffinger an dem Flaschenhals nach oben gleitet soweit, bis er auf die zu greifende Kante des Kastens auftrifft und diese zuverlässig gegriffen wird. Auf diese Weise wird auch das Eintauchen des Greifers, z.B. in einen Flaschenhals, verhindert. Ferner werden die Flaschen beim Greifvorgang nicht zerstört. Auch wird der Greifer selbst beim Auftreffen, z.B. auf einen Kastensteg nicht zerstört. Die Absenkbewegung der gesamten Greifvorrichtung wird, da die Greiffinger achsial nachgiebig ausgestaltet sind, in keinem Falle gestoppt und somit treten auch keine Störungen im Gesamtablauf des Proezesses auf.

Gemäß einer weiteren vorteilhaften Ausgestaltung sind die Greiffinger mit Einfahrhilfen in Form von Schrägen ausgestattet, wodurch geringe Positionierfehler der Greiffinger ausgeglichen werden.

Die Greiffinger sind in achsialen Führungsbuchsen angeordnet. Dadurch ist die exakte achsiale Führung der Greiffinger gewährleistet. Die Greiffinger sind außerdem in radialen Führungsbuchsen (Führungsbuchsen in Richtung der Greifkraft) geführt. Sie ermöglichen die Verstellung der Greiffinger in Greifrichtung und dienen zur Übertragung der auftretenden Momente, die durch Greiffinger erzeugt werden.

Die erforderliche Greifkraft wird von einzeln angesteuerten Zylindern aufgebracht. Sowohl den Greiffinger als auch den Druckleisten sind solche Antriebszylinder zugeordnet. Meistens handelt es sich dabei um Pneumatikzylinder. Weiterhin sind den Greiffingern Rückstellfedern zugeordnet. Die Rückstellfeder und der Pneumatikzylinder bringen den Greiffinger nach Lösen der Greifkraft wieder in die Ausgangsposition zurück. Gleichzeitig verhindert die Rückstellfeder das Verkanten des Greiffingers in der radialen Führungsbuchse. Die Druckleiste wird nach Lösen der Greifkraft durch den Pneumatikzylinder in die Ausgangslage zurückgebracht. Die einzelnen Druckleisten können gelenkig miteinander verbunden sein. Dadurch wird eine flexible Anpassung der Greifbacken an die Stapelstruktur bei gleichzeitiger Entnahme von mehreren Kästen ermöglicht. Die bei den Greifvorgängen auftretenden Momente durch die Druckleisten werden über eine Führung aufgegangen. Zur Erhöhung der Reibungskoeffizienten sind die Druckleisten an ihren, den Kastenkanten zugewandten Seiten mit einem Belag aus elastischem Material versehen. Dadurch wird zusätzlich die Anpassungsfähigkeit an Unregelmäßigkeiten der äußeren Kastenoberfläche erhöht. Bei diesem Belag kann es sich z.B. um einen Gummibelag handeln.

Die Erfindung wird anhand eines Ausführungsbeispieles, der in den nachfolgenden Zeichnungen dargestellt ist, näher erläutert. Es zeigen:
- Fig. 1:: eine schematische Darstellung eines Greifvorganges
- Fig. 2:: einen Schnitt durch den Greifer
- Fig. 3:: eine schematische Vorderansicht der Einrichtung

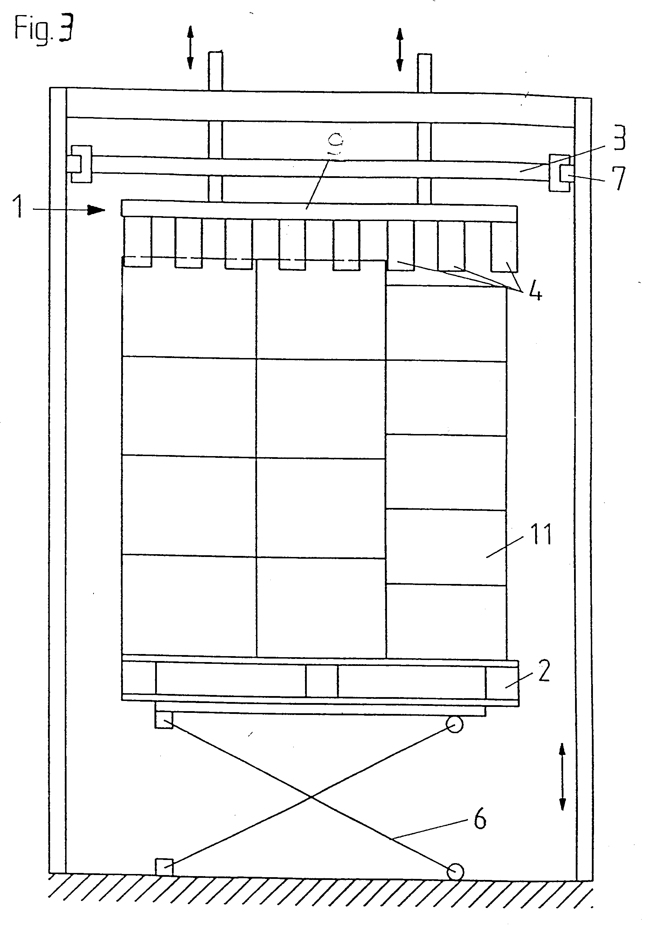

Die in Fig. 3 dargestellte Einrichtung weist eine Greifvorrichtung 1 mit einer sich über die gesamte Breite einer Palette 2 erstreckenden Traverse 3, an der Greiferköpfe 4 angeordnet sind, auf. Jeder Greiferkopf 4 ist mit einem Greifer 5 ausgestattet. Die Palette 2 ist auf einem Hubtisch 6 angeordnet und kann vertikal in ihrem Höhenniveau verstellt werden. Die Greifer-Traverse 3 ist an Führungsschienen 7 verschiebbar angeordnet. Die Greiferköpfe 4 sind an einer Greifleiste 9 über Drehgelenke 10 angeordnet. Die Greiferköpfe 4 sind an der Greifleiste 9 über Drehgelenke 10 angeordnet. Die Drehgelenke 10 können auch als Schwenkantrieb ausgestaltet sein. Auf der Palette 2 sind Kästen 11 gestapelt. Die Greiferköpfe 4 sind an der Greifleiste 18 so angeordnet, daß ihr Abstand untereinander einstellbar und veränderbar ist.

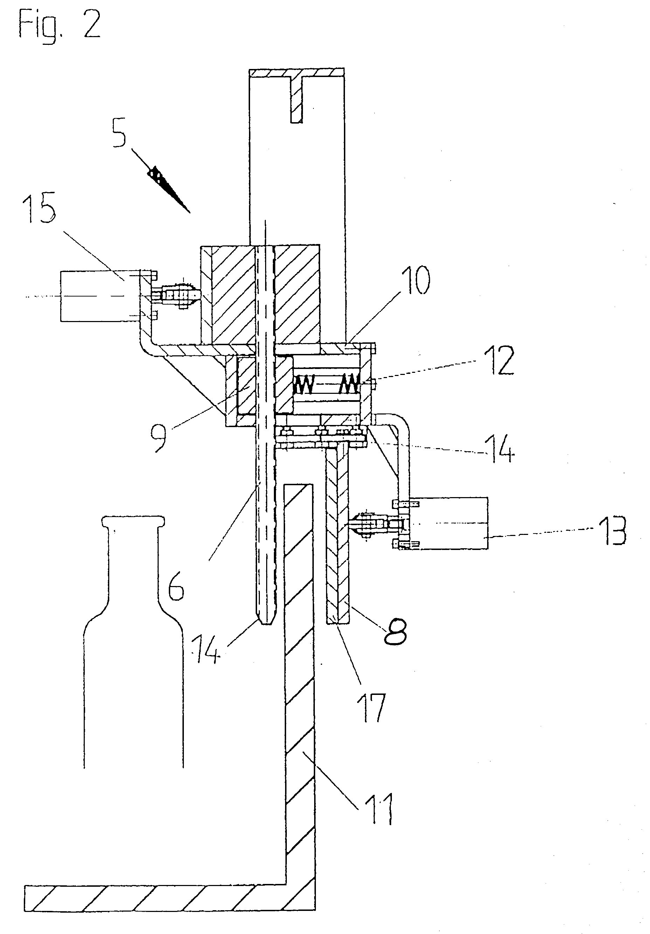

Der Greifer 5 weist Greiffinger 6 und eine Druckleiste 8 auf. Die drei Greiffinger 6 (Fig. 2) und die Druckleiste 8 bilden Greifbacken, mit denen der zu entnehmende Kasten 11 gegriffen wird. Dabei greifen die Greiffinger 6 in das "Innere" des Kastens ein, die Druckleiste 8 wird an der Außenseite des Kastens 11 angelegt. Die Greiffinger 6 sind in achsialen Führungsbuchsen 9 geführt. Jedem Greiffinger 6 ist ein die Greifkraft erzeugender Pneumatikzylinder 15 zugeordnet. Ferner ist jedem Greiffinger 6 eine Rückstellfeder 12 zugeordnet, die das Verkanten des Greiffingers 6 in der achsialen Führungsbuchse 9 verhindert. Die Greiffinger 6 weisen an seinen, in den zu entnehmenden Kasten 11 einfahrenden Enden, Einführschrägen 14 auf. Die Greifkraft der Druckleiste 8 wird mittels eines ihr zugeordneten Pneumatikzylinders 13 aufgebracht. Die Drucklesite 8 ist an ihrer, den zu greifenden Kästen 11 zugewandten Seite mit einem Reibbelag 17 versehen.

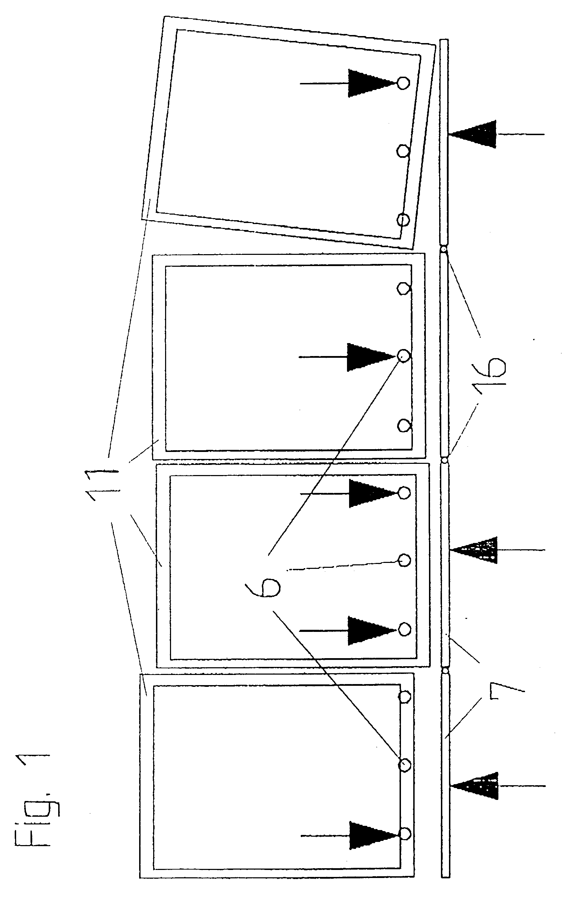

Es ergibt sich folgende Wirkungsweise (Fig. 1): Der Greifer 5 wird so in die Kästen 11 eingefahren, daß jeweils drei Greiffinger 6 mit der Innenseite des Kastens 11 in Berührung kommen und die Druckleiste 8 mit der Außenseite des Kastens 11 zusammenwirkt. In vorliegendem Ausführungsbeispiel weist der Greifer zwölf Greiferfinger 6 und vier Druckleisten 8 auf. Dadurch können in einem einzigen Greifvorgang vier Kästen entnommen werden. Die Druckleisten 8 sind miteinander über Gelenke 16 verbunden. Dadurch ist eine gute Anpassungsfähigkeit der Greifvorrichtung an unregelmäßige Stapelstrukturen gegeben.

## Patentansprüche

1. Greifer für eine Einrichtung zur Entnahme von oben offenen, auf einer Palette oder dergleichen gestapelten Kästen, insbesondere Getränkekästen, mit einer sich über die ganze Breite der Palette erstreckenden Traverse (3), an der eine Greifvorrichtung angeordnet ist, wobei die Greifvorrichtung Greiferköpfe (4) aufweist, deren Abstand in Längsrichtung der Traverse (3) flexibel einstellbar ist, und jeder Greiferkopf (4) mit einem finger- oder lamellenartig ausgestaltetem Greifer (5) zum Fixieren des aufzunehmenden Kastens (11) ausgestattet ist, und mit einer Erkennungssensorik zur Erkennung der obersten Kastenzeile, **dadurch gekennzeichnet**, daß der Greifer (5) Greifbacken aufweist, die durch achsial, d.h. in ihrer Längsrichtung, nachgiebige und in Greifkraftrichtung bewegbare Greiffinger (6) und mindestens eine in Greifkraftrichtung bewegbare Druckleiste (8) gebildet sind.

2. Einrichtung nach Anspruch 1, **dadurch gekennzeichnet**, daß die Greiffinger (6) an ihren Enden Einführungsschrägen (14) aufweisen.

3. Einrichtung nach Anspruch 1 oder 2, **dadurch gekennzeichnet**, daß die Greiffinger (6) in achsialen Führungsbuchsen (9) geführt sind.

4. Einrichtung nach einem der Ansprüche 1 bis 3, **dadurch gekennzeichnet**, daß die Greiffinger (6) zusätzlich in radialen Führungsbuchsen (10) geführt sind.

5. Einrichtung nach einem der vorangegangenen Ansprüche, **dadurch gekennzeichnet**, daß jedem Greiffinger (6) ein Antriebszylinder (15) und eine Rückstellfeder (12) zugeordnet sind.

6. Einrichtung nach einem der vorangegangenen Ansprüche, **dadurch gekennzeichnet**, daß jeder Druckleiste (8) ein Antriebszylinder (15) zugeordnet ist.

7. Einrichtung nach einem der vorangegangenen Ansprüche, **dadurch gekennzeichnet**, daß die Druckleisten (8) in einer Führungsbuchse (14) geführt sind.

8. Einrichtung nach einem der vorangegangenen Ansprüche, **dadurch gekennzeichnet**, daß mehrere Druckleisten (8) vorhanden sind und diese gelenkig miteinander verbunden sind.

9. Einrichtung nach einem der vorangegangenen Ansprüche, **dadurch gekennzeichnet**, daß die Druckleisten (8) an ihren, den zu greifenden Kästen (11) zugewandten Seiten mit einem Belag (17) aus elastischem Material versehen sind.

## Claims

1. A gripper for a device for removing crates which are open at the top and which are stacked on a pallet or the like, more particularly crates of drinks, with a cross-member (3) extending over the entire width of the pallet, on which cross-member a gripper device is disposed, the gripper device having gripper heads (4), the spacing of which in the longitudinal direction of the cross-member (3) is flexibly adjustable, and each gripper head (4) is provided with a gripper (5) in the form of a finger or blade for fixing the crate (11) to be accommodated, and with a recognition sensor system for recognising the top line of the crate,
characterised in that the gripper (5) has gripper jaws formed by gripper fingers (6) movable in the direction of the gripping force and flexible axially, i.e. in their longitudinal direction, and by at least one pressure strip (8) movable in the direction of the gripping force.

2. A device according to claim 1, characterised in that the gripper fingers (6) have entry bevels (14) at their ends.

3. A device according to claim 1 or 2, characterised in that the gripper fingers (6) are guided in axial guide bushes (9).

4. A device according to any one of claims 1 to 3, characterised in that the gripper fingers (6) are additionally guided in radial guide bushes (10).

5. A device according to any one of the preceding claims, characterised in that a drive cylinder (15) and a return spring (12) are associated with each gripper finger (6).

6. A device according to any one of the preceding claims, characterised in that a drive cylinder (15) is associated with each pressure strip (8).

7. A device according to any one of the preceding claims, characterised in that the pressure strips (8) are guided in a guide bush (14).

8. A device according to any one of the preceding claims, characterised in that a plurality of pressure strips (8) are provided and are pivotally interconnected.

9. A device according to any one of the preceding claims, characterised in that the pressure strips (8) are provided with a coating (17) of elastic material at their sides facing the crates (11) for gripping.

## Revendications

1. Griffe destinée à un dispositif pour prélever des caisses ouvertes à leur face supérieure, empilées sur une palette ou matériel équivalent, en particulier des caisses de boisson, avec une traverse (3) s'étendant sur toute la longueur de la palette, sur laquelle est disposé un dispositif de préhension, le dispositif de prise comportant des têtes de prises (4) dont l'écartement est réglable de manière flexible dans le sens longitudinal de la traverse (3) et dont chaque tête de prise (4) est équipée d'une griffe du type doigt ou lamelle pour fixer la boîte (11) à recevoir, et d'une technique sensorielle d'identification pour reconnaître la rangée de caisse supérieure,
caractérisée en ce que
la griffe (5) comprend des mâchoires de serrage qui sont formées par des doigts de serrage (6) souples axialement, c'est-à-dire dans leur sens longitudinal et mobiles dans la direction de l'effort de prise et par au moins une barre de serrage (8) mobile dans le sens de l'effort de serrage.

2. Dispositif selon la revendication 1,
caractérisé en ce que
les doigts de serrage (6) comprennent à leurs extrémités des chanfreins d'introduction (14).

3. Dispositif selon les revendications 1 ou 2,
caractérisé en ce que
les doigts de serrage (6) sont guidés dans des douilles de guidage (9).

4. Dispositif selon une des revendications 1 à 3,
caractérisé en ce que
les doigts de serrage (6) sont guidés en plus dans des douilles de guidage radiales (10).

5. Dispositif selon une des revendications précédentes,
caractérisé en ce qu'
à chaque doigt de serrage (6) sont associés un vérin de commande (15) et un ressort de rappel (12).

6. Dispositif selon une des revendications précédentes,
caractérisé en ce que
chaque barre de pression (8) est associée à un vérin de commande (15).

7. Dispositif selon une des revendications précédentes,
caractérisé en ce que
les barres de pression (8) sont guidées dans une douille de guidage (14).

8. Dispositif selon une des revendications précédentes,
caractérisé en ce que
plusieurs barres de pression (8) existent et celles-ci sont reliées les unes aux autres de manière articulée.

9. Dispositif selon une des revendications précédentes,
caractérisé en ce que
les barres de pression (8) sont munies, sur leurs faces tournées vers les caisses (11) à saisir, d'une couche (17) en matériau élastique.
